# EUROPÄISCHE PATENTANMELDUNG

(11) **EP 3 506 177 A1**
(43) Veröffentlichungstag der Anmeldung: **03.07.2019**
(21) Anmeldenummer: 17210890.4
(22) Anmeldetag: 28.12.2017
(51) Int. Cl.: G06Q 10/06

(54) **AUTONOME EINHEIT**

(71) Anmelder: Siemens Aktiengesellschaft, 80333 München (DE)
(72) Erfinder: Dietrich, Vincent, 81549 München (DE); Albrecht, Sebastian, 85399 Hallbergmoos (DE); Fiegert, Michael, 81739 München (DE)

(57) **Zusammenfassung**

Die Erfindung betrifft eine Autonome Einheit (1), aufweisend mindestens eine Eingabeschnittstelle (10) zum Empfangen mindestens zweier unterschiedlicher Eingangsdatensätze (12, 14), und eine Annotiereinheit (20) zum Annotieren eines der mindestens zwei Eingangsdatensätze (12, 14) in einen ersten Ausgangsdatensatz (22). Ferner ist die Erfindung auf ein entsprechendes Verfahren und Computerprogrammprodukt gerichtet.

## Beschreibung

### 1. Technisches Gebiet

Die Erfindung betrifft eine autonome Einheit. Ferner ist die Erfindung auf ein Computer-implementiertes Verfahren und ein Computerprogrammprodukt gerichtet. Die Erfindung kann in den technischen Bereichen der Automatisierungstechnik und Robotik eingesetzt werden.

### 2. Stand der Technik

Die Optimierung der Datenverarbeitung und Datenspeicherung gewinnt in der industriellen Automatisierungstechnik zunehmend an Bedeutung. In Automatisierungsanlagen, wie Fertigungs- Produktionsanlagen oder Fertigungsstraßen für die Produktion unterschiedlicher Gegenstände, wie Kraftfahrzeuge, Mediengeräte, Möbel usw. spielen insbesondere die Prozesse der Planung und Montage eine entscheidende Rolle. In diesen Prozessen werden große Datenmengen generiert. Jedoch können nicht alle Datensätze gespeichert werden trotz sinkender Speicherkosten.

Beispielsweise werden verschiedene Datensätze im Rahmen der Aufgaben einer Robotereinheit der Automatisierungsanlage generiert. Die Robotereinheit erfüllt u.a. Wahrnehmungsaufgaben, um ein zugreifendes Objekt zu erkennen. Nach der Wahrnehmung des Objekts kann die Robotereinheit das Objekt greifen und neu platzieren etc. Die Variation der Aufgaben einer Robotereinheit oder sonstigen Einheit solcher Automatisierungsanlagen ist hoch und die Umgebungsbedingungen verändern sich ständig.

Gemäß dem Stand der Technik erfolgt die Datenverarbeitung sowie Datenspeicherung manuell. Die Speicherung nutzbarer und sinnvoller Datensätze ist meist aufwendig und komplex. Weiterhin ist die manuelle Datenverarbeitung und Datenspeicherung fehleranfällig sowie wenig nachvollziehbar, insbesondere aufgrund mangelnder Dokumentation oder Visualisierung.

Die vorliegende Erfindung stellt sich daher die Aufgabe eine autonome Einheit bereitzustellen, welche effizient und zuverlässig Daten verarbeiten sowie speichern kann und ferner fähig ist sich dynamisch den Umgebungsbedingungen anzupassen.

### Zusammenfassung der Erfindung

Die oben genannte Aufgabe wird erfindungsgemäß durch eine autonome Einheit gelöst, aufweisend:
a. mindestens eine Eingabeschnittstelle zum Empfangen mindestens zweier unterschiedlicher Eingangsdatensätze, und
b. eine Annotiereinheit zum Annotieren eines der mindestens zwei Eingangsdatensätze in einen ersten Ausgangsdatensatz.

Dementsprechend ist die Erfindung auf eine autonome Einheit gerichtet. Der Begriff autonom steht für selbstständig, selbstbestimmt und unabhängig. Ein beispielhaftes autonomes System ist ein autonomes Fahrzeug. Unter autonomem Fahren ist die Fortbewegung von Fahrzeugen, mobilen Robotern und fahrerlosen Transportsystemen zu verstehen, die sich weitgehend autonom verhalten.

Die autonome Einheit empfängt über eine Eingabeschnittstelle einen ersten und einen zweiten Eingangsdatensatz, welche sich voneinander unterscheiden. Der erste Eingangsdatensatz wird durch eine Annotiereinheit annotiert, indem der erste Eingangsdatensatz mit dem zweiten Eingangsdatensatz assoziiert oder in Beziehung gesetzt wird. Die autonome Einheit kann Teil einer Automatisierungsanlage sein. Durch die Annotation werden die Eingangsdatensätze vorteilhafterweise ergänzt und die Datenmenge insgesamt erhöht.

Der erste Eingangsdatensatz umfasst insbesondere Datenströme, welche gemessene oder erfasste Werte, wie Messdaten oder Maschinendaten, aufweisen. Der zweite Eingangsdatensatz umfasst andere Informationen oder Daten, beispielsweise eine Konfiguration der Hardware, eine Konfiguration der Software der autonomen Einheit, eine Beschreibung des Aufbaus und/oder der Semantik der Komponenten der autonomen Einheit oder des Systems, wie weiter unten im Detail ausgeführt.

Beispielsweise werden durch Sensoren einer Kameraeinheit einer Automatisierungsanlage kontinuierlich bzw. in regelmäßigen Abständen Bilder aufgenommen. Die Datenströme umfassen dementsprechend Bildaufnahmen. Die Bildaufnahmen können beispielsweise Greifposen einer Robotereinheit zeigen. Folglich können die Bildaufnahmen jeweils mit einem bestimmten Zeitstempel und einer Greifpose oder einer anderen Abfolge der Robotereinheit assoziiert werden. In einer beispielhaften Bildaufnahme nimmt die Robotereinheit ein bestimmtes Objekt wahr, greift es und bewegt es von einer Position zu einer anderen Position.

Der Vorteil liegt darin, dass die Annotation im Gegensatz zum Stand der Technik autonom durch die Einheit durchgeführt wird. Dadurch kann Personal sowie Zeit eingespart werden. Folglich können auch Kosten reduziert werden. Weiterhin ist die autonome Einheit vorteilhafterweise weniger fehleranfällig und somit zuverlässig. Ferner können als ein weiterer Vorteil sehr einfach Daten gesammelt werden, insbesondere über verschiedene Aufgaben und damit ein Erfahrungsschatz aufgebaut werden. Dementsprechend wächst das Engineeringwissen und die autonome Einheit kann sich aus Erfahrung verbessern.

In einer Ausgestaltung weist ein erster Eingangsdatensatz der mindestens zwei Eingangsdatensätze Rohdaten oder verarbeitete Daten auf und der zweite Eingangsdatensatz der mindestens zwei Eingangsdatensätze weist Hintergrunddaten auf. Dementsprechend ist der erste Eingangsdatensatz auf Rohdaten, wie Messdaten oder Maschinendaten, oder auch bereits prozessierte Daten gerichtet. Bereits prozessierte Daten sind beispielsweise Zustandsinformationen des Systems und/oder der Softwarekomponenten. Der zweite Eingangsdatensatz ist hingegen auf Hintergrundinformationen oder Hintergrundwissen gerichtet, wie Konfiguration der Hardware, Software der autonomen Einheit oder der Automatisierungsanlage, oder eine Aufgabenbeschreibung etc. Die Aufgabenbeschreibung kann Informationen über die Aufgabe und die Anforderungen der autonomen Einheit oder der Automatisierungsanlage enthalten. Bei der Aufgabe handelt es sich beispielsweise um das Fügen der Bauteile und bei den Anforderungen um eine bestimmte Toleranz. Weiterhin können die Hintergrunddaten zusätzlich oder alternativ auf Modelle und sonstige Daten gerichtet sein. Sonstige Daten können Eigenschaften der Prozesse oder der Automatisierungsanlage betreffen.

In einer weiteren Ausgestaltung ist das Annotieren semantisch, insbesondere Ontologie-basiert. Der ersten Eingangsdatensatz wird um zusätzliches Wissen ergänzt. Beispielsweise werden die obigen Bildaufnahmen Zeitstempel und/oder weiteren Hintergrundinformationen des zweiten Eingangsdatensatzes zugeordnet. Die Annotation kann Ontologie-basiert sein. Darauf aufbauend kann der erste Ausgangsdatensatz weiter analysiert werden, beispielsweise gefiltert und/oder bewertet werden. Die Annotation hat sich hinsichtlich der Datenergänzung oder Wissensanreicherung als besonders vorteilhaft erwiesen.

In einer weiteren Ausgestaltung weist die autonome Einheit weiterhin eine Datenreduktionseinheit zum Filtern oder Komprimieren des ersten Ausgangsdatensatzes in einen zweiten Ausgangsdatensatz auf. Dementsprechend kann der annotierte erste Eingangsdatensatz, welcher auch erster Ausgangsdatensatz genannt wird, anschließend durch eine Datenreduktionseinheit gefiltert oder komprimiert werden. Zusätzlich oder alternativ können auch andere Daten gefiltert oder komprimiert werden. Beispielsweise können umfangreiche Bildaufnahmen komprimiert werden oder bestimmte Bildaufnahmen können vollständig gelöscht werden, beispielsweise Bilder mit nicht relevanten Inhalten. Die Datenreduktion kann als Verfahrensschritt zeitlich dem Annotationsschritt vor- oder nachgeschaltet sein. Die Datenreduktion hat sich hinsichtlich eines geringeren Speicherbedarfs und der Reduktion von Kosten als besonders vorteilhaft erwiesen.

In einer weiteren Ausgestaltung weist die autonome Einheit weiterhin eine Simulationseinheit zum Bestimmen mindestens eines simulierten Datensatzes für den ersten Eingangsdatensatz, den zweiten Eingangsdatensatz, den ersten Ausgangsdatensatz und/oder den zweiten Ausgangsdatensatz auf. Dementsprechend können ferner Simulationsmodelle berücksichtigt werden. Simulationsmodelle reichen insbesondere von einfachen mathematischen Modellen der Komponenten bis zu komplexen Physiksimulationen und photorealistischen Renderings des Systems.

In einer weiteren Ausgestaltung weist die autonome Einheit weiterhin eine Detektionseinheit zum Detektieren mindestens einer Abweichung zwischen dem mindestens einen simulierten Datensatz und mindestens einem Datensatz, ausgewählt aus der Gruppe, aufweisend den ersten Eingangsdatensatz, den zweiten Eingangsdatensatz, den ersten Ausgangsdatensatz und den zweiten Ausgangsdatensatz auf. Dementsprechend kann auf Basis der Simulationsmodelle ein erwarteten Verhalten bestimmt werden sowie die Abweichung vom erwarteten Verhalten. Eine Abweichung deutet insbesondere auf einen Fehler oder eine Anomalie hin. Fehler können sich auf einzelne Komponenten der autonomen Einheit, der Automatisierungsanlage oder eines Prozesses der Automatisierungsanlage beziehen. Beispielsweise kann es sich um eine Anomalie oder einen Fehler einer Greifpose oder sonstigen Fehler einer Robotereinheit handeln.

In einer weiteren Ausgestaltung ist die Detektionseinheit weiterhin zum Anerkennen oder Verwerfen des ersten Ausgangsdatensatzes oder des zweiten Ausgangsdatensatzes auf Basis der mindestens einen Abweichung eingerichtet. Dementsprechend kann die Detektionseinheit den ersten oder zweiten Ausgangsdatensatz auf Basis der mindestens einen Abweichung bewerten. Falls die Detektionseinheit eine Abweichung detektiert, sind die Daten relevant bzw. haben einen wesentlichen Informationsgehalt. Diese Daten werden anerkannt, beispielsweise gespeichert und somit nicht verworfen. Die anderen Daten ohne Abweichung werden verworfen. Die Anerkennung der Daten hat sich hinsichtlich der Qualität der Daten als besonders vorteilhaft erwiesen. Die Verwerfung der Daten hingegen kann Speicherplatz und Bandbreite einsparen.

In einer weiteren Ausgestaltung weist die autonome Einheit weiterhin eine Speichereinheit zum Speichern des ersten Eingangsdatensatzes, des zweiten Eingangsdatensatzes, des ersten Ausgangsdatensatzes und/oder zweiten Ausgangsdatensatzes auf, wobei die Speichereinheit insbesondere ein lokaler Speicher oder ein remote Speicher ist.

In einer weiteren Ausgestaltung weist die autonome Einheit weiterhin eine Anzeigeeinheit zum Anzeigen des ersten Eingangsdatensatzes, des zweiten Eingangsdatensatzes, des ersten Ausgangsdatensatzes und/oder zweiten Ausgangsdatensatzes auf.

Dementsprechend können die Ausgangsdatensätze zum Teil oder gesamt ausgegeben und verwendet werden, insbesondere gespeichert und/oder angezeigt werden. Gleiches gilt für andere Daten, wie Eingangsdatensätze oder Simulationsmodelle etc.

Die Erfindung betrifft ferner ein computer-implementiertes Verfahren, aufweisend die Schritte:
a. Empfangen mindestens zweier unterschiedlicher Eingangsdatensätze durch mindestens eine Eingabeschnittstelle,
b. Annotieren eines der mindestens zwei Eingangsdatensätze in einen ersten Ausgangsdatensatz durch eine Annotiereinheit.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt eine schematische Darstellung einer erfindungsgemäßen autonomen Einheit.
- FIG 2: zeigt ein Ablaufdiagramm eines erfindungsgemäßen Verfahrens.

### 5. Beschreibung der bevorzugten Ausführungsformen

Im Folgenden werden bevorzugte Ausführungsformen der vorliegenden Erfindung in Bezug auf die Figuren beschrieben.

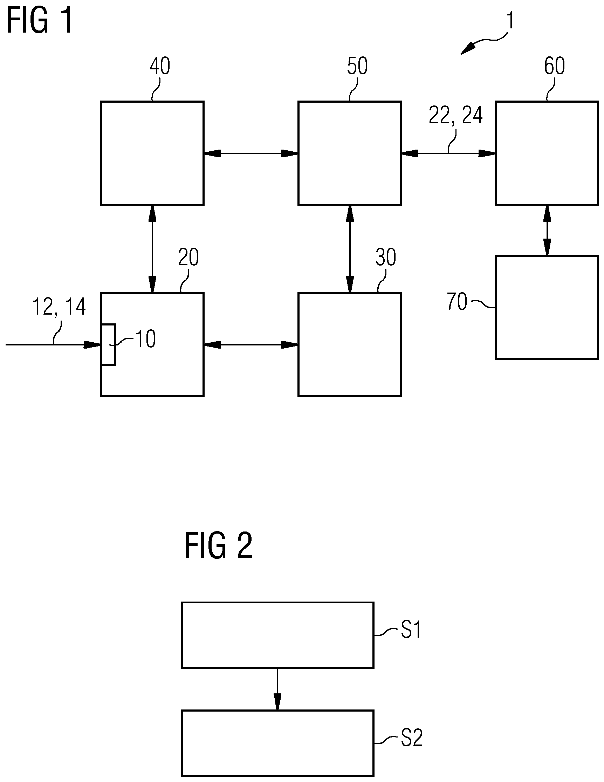

Figur 1 eine Detailansicht einer erfindungsgemäßen autonomen Einheit 1. Die autonome Einheit 1 weist eine Annotiereinheit 20 und eine Eingabeschnittestelle 10 zum Empfangen von Daten auf. Die Eingabeschnittstelle 10 kann Teil der Annotiereinheit 20 sein. Neben der Eingabeschnittstelle 10 können zusätzlich auch eine oder mehrere Ausgabeschnittstellen zum Ausgeben von Daten vorgesehen sein (nicht gezeigt).

Die Annotiereinheit 20 empfängt über die Eingabeschnittstelle 10 zwei unterschiedliche Datensätze 12, 14. Der erste Eingangsdatensatz 12 umfasst Rohdaten oder verarbeitete Daten. Der zweite Datensatz 14 umfasst hingegen Hintergrunddaten. Diese Eingangsdatensätze 12, 14 werden durch die Annotiereinheit 20 weiterverarbeitet, insbesondere indem der erste Eingangsdatensatz 12 mithilfe des zweiten Eingangsdatensatzes 14 annotiert wird. Die Annotation erfolgt insbesondere Ontologie-basiert. Der annotiere erste Eingangsdatensatz 12 wird auch als erster Ausgangsdatensatz 22 bezeichnet.

Zusätzlich kann die autonome Einheit 1 eine oder mehrere der folgenden Untereinheiten oder Komponenten aufweisen, nämlich eine Datenreduktionseinheit 30, eine Simulationseinheit 40, eine Detektionseinheit 50, eine Speichereinheit 60 und eine Anzeigeeinheit 70. Der erste Ausgangsdatensatz 22 kann durch die eine oder die mehreren Untereinheiten in einen zweiten Ausgangsdatensatz 24 weiterverarbeitet werden. Beispielsweise kann der erste Ausgangsdatensatz 22 durch die Datenreduktionseinheit 30 gefiltert oder komprimiert werden. Der daraus resultierende zweite Ausgangsdatensatz 24 kann in einer Speichereinheit 60 gespeichert und/oder auf einer Anzeigeeinheit 70 angezeigt werden.

Ein beispielhaftes autonomes System 1 in einem Industriekontext kann mehrere Einheiten aufweisen, um seinen Umgebungszustand zu erfassen, wie eine Kameraeinheit, eine Kameraeinheit an einem Endeffektor und einen Kraftmomentensensor, welcher zwischen dem Endeffektor und einem Greifer angeordnet werden kann. Die Hintergrunddaten können ein Weltmodell umfassen. Die Qualität des Weltmodells kann im Laufe eines Prozesses variieren.

Gemäß einem beispielhaften Prozess kann ein zu greifendes Objekt zunächst durch die Kameraeinheit wahrgenommen werden. Die Kameraeinheit ist jedoch zunächst weit von dem Objekt entfernt. Dadurch kann die Kameraeinheit die Pose des zu greifenden Objektes nur auf 1-2 cm genau, relativ zum Endeffektor, lokalisieren. Ferner kann die Klasse des Objektes nicht mit hoher Sicherheit geschätzt werden, sondern liegt beispielsweise bei 80%.

Daher wird die Kameraeinheit als Nächstes am Endeffektor nahe über der wahrscheinlichsten Pose des Objekts positioniert, insbesondere um zu verifizieren, ob es das richtige Objekt ist und die Lokalisierung des Objektes zu verbessern. Dadurch kann die Klassenwahrscheinlichkeit auf 98% und die Posengenauigkeit auf 1mm erhöht werden.

Daraufhin greift der Greifer das zu greifende Objekt und kann dabei mithilfe der kapazitiven Sensoren in den Fingerkuppen die Objektposition auf 0,5 mm genau schätzen. Beim Greifen wird das Objekt zwangsläufig ungewollt bewegt und die Unsicherheit der Schätzung steigt wieder auf 1 mm.

Daraufhin wird das Objekt bewegt und in ein anderes stationäres Objekt eingefügt. Durch den Kraftmomentensensor und einen geregelten Fügeprozess kann dabei die Objektposition im Greifer auf rückwirkend auf 0,2 mm geschätzt werden.

Im Zuge dieses Prozesses kann die autonome Einheit 1 beispielsweise autonom bestimmte Ausgangsdatensätze bestimmen.

Die Posenungenauigkeit kann zum Beispiel rückwirkend auf die Sensordaten der Kameraeinheiten übertragen werden. Die Sensordaten 12 können hierzu lokal in einer Speichereinheit 60 zwischengespeichert und mit der obigen Posen- sowie Klassenschätzung 14 rückwirkend annotiert werden.

Ferner kann dabei berücksichtigt werden, wie die Datenverarbeitungssysteme der Kameraeinheiten strukturiert sind etc. Falls eine Kameraeinheit einen Datenbasierten und die andere Kameraeinheit am Endeffektor hingegen einen Modellbasierten Algorithmus verwendet, sind die Daten für die erstgenannte Kameraeinheit relevanter, um die Qualität zu steigern.

Für diese Kameraeinheit können annotierte Bildaufnahmen der Kameraeinheit gespeichert werden. Für das Datenverarbeitungssystem der anderen Kameraeinheit am Endeffektor können die Daten hingegen verwendet werden, um das Unsicherheitsmodell anzupassen. Hierfür können beispielsweise die Relativpose zwischen der Kameraeinheit und dem Objekt, das Ergebnis der Datenverarbeitung und/oder die genauere Schätzung gespeichert werden. Dieses Speichern ist weniger datenintensiv als das Speichern eines ganzen annotierten Bildes oder der Bildaufnahmen.

Weiterhin kann die autonome Einheit 1 beispielsweise den Teil der Trajektorie, die sich das Objekt im Sichtfeld der erstgenannten Kameraeinheit befindet annotieren und/oder speichern, um die Performanz der Datenverarbeitung der Kameraeinheit zu verbessern.

Weiterhin kann die autonome Einheit 1 einen gelernte Regler durch die Kameraeinheit oder sonstige Sensoren erfassen und ein genaues Logging der Kraft- und Momentendaten durchführen.

Die Ausgangsdaten 22, 24 der autonomen Einheit 1 können dazu verwendet werden die Performanz des Systems zu steigern.

Der obige Prozess kann durch die autonome Einheit 1 optimiert bzw. verkürzt werden. Folglich kann eine hohe Zeitersparnis erzielt werden und die Effizienz gesteigert werden.

Weiterhin kann die Zuverlässigkeit des Fügeprozesses durch mehr gelernte Daten und die Toleranz gegenüber der Ungenauigkeit in der Posenschätzung durch die autonome Einheit 1 erhöht werden.

Weiterhin kann aus dem Hintergrundwissen über andere Systeme und einer Skilldatenbank hervorgehen, dass ein bildgestützter Regeloperator für den Fügeprozesse in der Skilldatenbank verfügbar ist. Der Begriff "Skill" bezeichnet in diesem Kontext gekapselte Programme für autonome Systeme zur Ausführung bestimmter Aufgaben, beispielsweise die Datenverarbeitung für die Bildverarbeitung. Der Regeloperator kann den obigen Prozess noch zuverlässiger gestalten, benötigt jedoch Daten, die mithilfe der autonomen Einheit 1 automatisch gespeichert werden. Die autonome Einheit 1 kann für den Regeloperator eine Simulation verwenden, um den Nutzen des alternativen Operators einschätzen zu können. Die Simulation kann durch die Simulationseinheit 40 durchgeführt werden.

Figur 2 zeigt das erfindungsgemäße Verfahren mit den zwei Verfahrensschritten in einem Ablaufdiagramm. Die Verfahrensschritte das Empfangen S1 und das Annotieren S2 werden durch die autonome Einheit 1 durchgeführt, wie weiter oben beschrieben.

## Patentansprüche

1. Autonome Einheit (1), aufweisend:
a. mindestens eine Eingabeschnittstelle (10) zum Empfangen mindestens zweier unterschiedlicher Eingangsdatensätze (12, 14), und
b. Eine Annotiereinheit (20) zum Annotieren eines der mindestens zwei Eingangsdatensätze (12, 14) in einen ersten Ausgangsdatensatz (22).

2. Autonome Einheit (1) nach Anspruch 1, wobei ein erster Eingangsdatensatz (12) der mindestens zwei Eingangsdatensätze (12, 14) Rohdaten oder verarbeitete Daten aufweist und der zweite Eingangsdatensatz (14) der mindestens zwei Eingangsdatensätze (12, 14) Hintergrunddaten aufweist.

3. Autonome Einheit (1) nach Anspruch 1 oder Anspruch 2, wobei das Annotieren semantisch, insbesondere Ontologie-basiert ist.

4. Autonome Einheit (1) nach einem der vorhergehenden Ansprüche, weiterhin aufweisend eine Datenreduktionseinheit (30) zum Filtern oder Komprimieren des ersten Ausgangsdatensatzes (22) in einen zweiten Ausgangsdatensatz (24).

5. Autonome Einheit (1) nach einem der vorhergehenden Ansprüche, weiterhin aufweisend eine Simulationseinheit (40) zum Bestimmen mindestens eines simulierten Datensatzes für den ersten Eingangsdatensatz (12), den zweiten Eingangsdatensatz (14), den ersten Ausgangsdatensatz (22) und/oder den zweiten Ausgangsdatensatz (24).

6. Autonome Einheit (1) nach Anspruch 5, weiterhin aufweisend eine Detektionseinheit (50) zum
- Detektieren mindestens einer Abweichung zwischen dem mindestens einen simulierten Datensatz und mindestens einem Datensatz, ausgewählt aus der Gruppe, aufweisend den ersten Eingangsdatensatz (12), den zweiten Eingangsdatensatz (14), den ersten Ausgangsdatensatz (22) und den zweiten Ausgangsdatensatz (24).

7. Autonome Einheit (1) nach Anspruch 6, wobei die Detektionseinheit (50) weiterhin zum
- Anerkennen oder Verwerfen des ersten Ausgangsdatensatzes (22) und/oder des zweiten Ausgangsdatensatzes (24) auf Basis der mindestens einen Abweichung
eingerichtet ist.

8. Autonome Einheit (1) nach einem der vorhergehenden Ansprüche, weiterhin aufweisend eine Speichereinheit (60) zum Speichern des ersten Eingangsdatensatzes (12), des zweiten Eingangsdatensatzes (14), des ersten Ausgangsdatensatzes (22) und/oder zweiten Ausgangsdatensatzes (24), wobei die Speichereinheit (60) insbesondere ein lokaler Speicher oder ein remote Speicher ist.

9. Autonome Einheit (1) nach einem der vorhergehenden Ansprüche, weiterhin aufweisend eine Anzeigeeinheit (70) zum Anzeigen des ersten Eingangsdatensatzes (12), des zweiten Eingangsdatensatzes (14), des ersten Ausgangsdatensatzes (22) und/oder zweiten Ausgangsdatensatzes (24).

10. Computer-implementiertes Verfahren, aufweisend die Schritte:
a. Empfangen mindestens zweier unterschiedlicher Eingangsdatensätze (12, 14) durch mindestens eine Eingabeschnittstelle (10) (S1),
b. Annotieren eines der mindestens zwei Eingangsdatensätze (12, 14) in einen ersten Ausgangsdatensatz (22) durch eine Annotiereinheit (20) (S2).

11. Computerprogrammprodukt mit einem Computerprogramm, das Mittel zur Durchführung des Verfahrens nach Anspruch 10 aufweist, wenn das Computerprogramm auf einer programmgesteuerten Einrichtung zur Ausführung gebracht wird.
